# EUROPÄISCHE PATENTSCHRIFT

(11) **EP 1 566 132 B1**
(45) Veröffentlichungstag und Bekanntmachung des Hinweises auf die Patenterteilung: **23.04.2008**
(21) Anmeldenummer: 05002862.0
(22) Anmeldetag: 11.02.2005
(51) Int. Cl.: A47J 47/20

(54) **Einsatz für ein Restebecken einer Küchenspüle**
Insert for remainders in a kitchensink
Insert pour des restes dans un évier

(30) Priorität: 18.02.2004 DE 202004002656 U
(43) Veröffentlichungstag der Anmeldung: 24.08.2005
(73) Patentinhaber: NIRO-PLAN AG, 4663 Aarburg (CH)
(72) Erfinder:
(74) Vertreter: Petersen, Frank

(56) Entgegenhaltungen:
- CH-A- 243 068
- US-A- 1 811 896
- US-A- 4 033 461

## Beschreibung

Die Erfindung betrifft einen gelochten Einsatz für ein Restebecken einer Küchenspüle, mit den Merkmalen des Oberbegriffes des Anspruches 1. Aus der US-A-1 811 856 ist eine Waschschüssel bekannt geworden, die an einer Seitenwand Überlauföffnungen vorgesehen hat.

Küchenspülen als solche sind allgemein bekannt. Sie werden aus Edelstahl hergestellt, können aber auch aus Emaille, Keramik oder Kunststoff (gegebenenfalls mit entsprechenden Zusätzen) bestehen.

Außer zum eigentlichen Spülen werden Küchenspülen auch benutzt für in der Küche anfallende Putz- und Vorbereitungsarbeiten, z. B. von Lebensmitteln.

Es ist dabei bekannt, auf den Spülen entsprechende Rüstbretter aus Holz, Kunststoff oder Glas vorzusehen, auf denen entsprechende Arbeiten durchgeführt werden. Bei diesen Arbeiten anfallende Reste werden entweder über einen in die Spüle integrierten Abwurfschacht direkt in einen Mülleimer verbracht oder aber häufiger in ein Restebecken geschoben. In diesem Restebecken wird üblicherweise ein gelochter Einsatz vorgesehen, so dass Flüssigkeit, die an den Abfällen, die in den Einsatz geschoben werden, haftet und von diesen abtropft nach unten aus dem Einsatz heraus in das Restebecken laufen kann, von wo es durch einen am Boden des Restebeckens vorgesehenen Ablauf in ein Ablaufrohr gelangt.

Die eigentlichen Abfälle werden dann in einen Abfalleimer oder zu einem Kompostplatz o. ä. verbracht, wozu der Einsatz aus dem Restebecken herausnehmbar ist.

Es wird dabei unter anderem als nachteilig empfunden, dass beim Verbringen der im Einsatz befindlichen Reste von diesen noch abtropfende Restflüssigkeit weiter aus der Lochung des Einsatzes tropfen kann und dabei die Küche verschmutzt.

Aufgabe der vorliegenden Erfindung ist es daher, einen gelochten Einsatz für ein Restebecken weiterzubilden.

Diese Aufgabe wird erfindungsgemäß bei einem gelochten Einsatz für ein Restebecken einer Küchenspüle mit den Merkmalen des Oberbegriffs des Anspruches 1 mit den Merkmalen des kennzeichnenden Teils des Anspruches 1 gelöst.

Bei dem Einsatz sind der Boden sowie der Übergang zu der Wand ungelocht, so dass sich im unteren Bereich des Einsatzes ein Sammelraum bildet, von dem abtropfende Restflüssigkeit aufgenommen wird während eines Verbringens des Einsatzes vom Restebecken zu einem Abfalleimer o. ä., so dass diese Flüssigkeit nicht auf den Boden tropft.

Dieses ist recht einfach, hat sich aber doch als sehr wirkungsvoll erwiesen.

Bei der erfindungsgemäßen Lösung ist der Boden in seiner Mitte nach oben gewölbt. Der Scheitelpunkt der Wölbung liegt dabei niedriger als die Unterkante der Lochung an der umlaufenden Wand.

Durch die vorgesehene Wölbung wird der Boden zum einen stabilisiert. Weiterhin wird das Volumen, das zur Aufnahme von abtropfender Restflüssigkeit zur Verfügung steht etwas verringert. Dies hat den Vorteil, dass sich hier nicht zuviel Restflüssigkeit sammelt, die in einem Abfalleimer für Grünabfälle grundsätzlich unerwünscht ist. Die in derartigen Abfalleimern verwandten Papier-Abfalltüten werden durch diese Flüssigkeit in unerwünschter Weise aufgeweicht.

Weiterhin hat der gewölbte Boden den Vorteil, dass unterhalb des Einsatzes ein Hohlraum gebildet wird, in dem beispielsweise der Betätigungsknopf für einen Ablaufstöpsel einer Ablaufgarnitur liegen kann.

Um die Handhabbarkeit des Einsatzes zu verbessern wird vorgeschlagen, am oberen Rand der umlaufenden Wand einen Bügelgriff anzubringen, der in eine nahe zur Wand liegende Ruheposition verschwenkbar ist, wobei dieser Griff eine Form hat, mit der er in dieser Ruheposition entlang des Inneren der Wand verläuft.

Der Bügelgriff kann damit einfach hochgeschwenkt werden, wenn er benötigt wird zum Verbringen des gelochten Einsatzes zu einem Abfallbehälter. Bei Nichtbedarf wird er unauffällig umgeschwenkt und liegt dabei dann im Inneren des gelochten Einsatzes, womit er einfach greifbar ist.

Die an der umlaufenden Wand des Restebeckens vorgesehene Lochung ist vorzugsweise durch im wesentlichen vertikal verlaufende Schlitze gebildet. Diese bilden sowohl einen ausreichenden Durchtritt für Flüssigkeit und sind andererseits auch fertigungstechnisch einfach in einen Einsatz einzubringen.

Weitere Vorteile und Merkmale der Erfindung ergeben sich aus der nachfolgenden Beschreibung eines Ausführungsbeispiels. Dabei zeigt
- Figur 1: die teilweise aufgebrochene Schnittansicht eines erfindungsgemäßen Einsatzes;
- Figur 2: eine Aufsicht auf einen Einsatz gemäß Figur 1;
- Figur 3: eine Vergrößerung des Detail III in Figur 2.

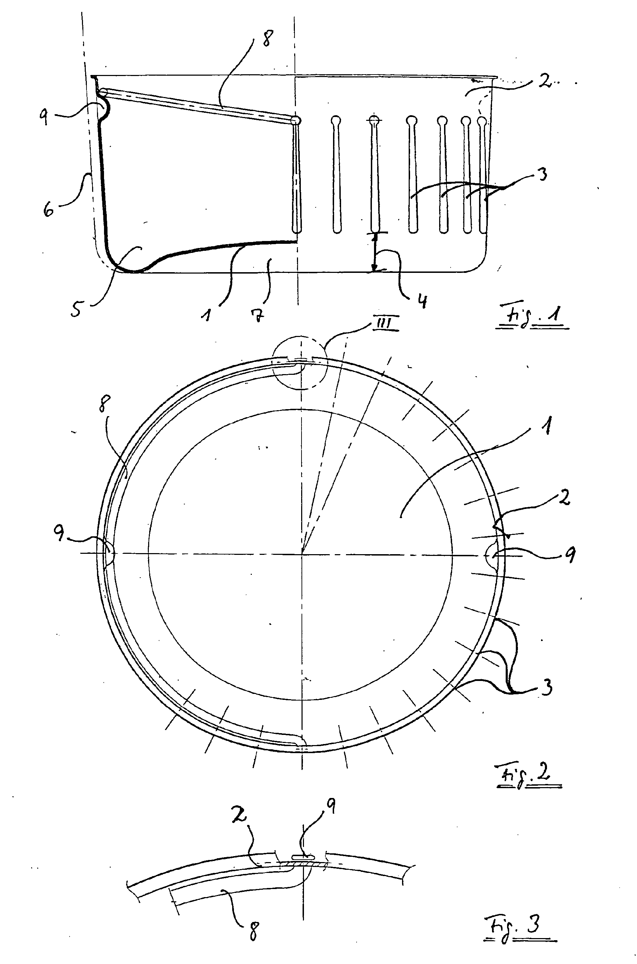

In Figur 1 erkennt man die Seitenansicht eines erfindungsgemäßen Einsatzes für ein Restebecken einer Küchenspüle. Der hier dargestellte Einsatz ist aus Edelstahl hergestellt. Es ist aber grundsätzlich auch möglich ihn aus Kunststoff, Emaille o. ä. zu fertigen.

Der gelochte Einsatz hat einen im Wesentlichen horizontal ausgerichteten Boden 1 sowie eine um diesen umlaufende im Wesentlichen vertikal ausgerichtete Wand 2. In die umlaufende Wand 2 ist über deren Umfang im Wesentlichen gleichmäßig verteilt eine Vielzahl von vertikal verlaufenden Schlitzen 3 eingebracht, die die Lochung des Einsatzes bilden. Diese Schlitze 3 haben an ihrem unteren Ende einen Abstand 4 zum Boden 1, wodurch sich auf der Innenseite des im Wesentlichen zylinderartigen Einsatzes ein oberhalb des Bodens 1 liegender Raum 5 ergibt. Außer einer zylindrischen Form kann der Einsatz auch oval oder im Wesentlichen länglich / rechteckig ausgebildet sein, um jeweils an die Form eines Restebeckens angepasst in dieses eingesetzt werden zu können.

Wenn der gelochte Einsatz in ein (strichpunktiert dargestelltes) Restebecken 6 eingesetzt wird, kann er z. B. in das Restebecken geworfene Grünabfälle wie Schalen, Abschnitte etc. aufnehmen. Von diesen Abfällen tropfende Restflüssigkeit tritt durch die Schlitze 3 in das Restebecken 6 hinein und kann aus diesem an dessen Boden ablaufen, wofür hier eine Ablaufgarnitur vorgesehen ist. Wenn der Einsatz gefüllt ist, wird er aus dem Restebecken 6 entnommen und beispielsweise zu einem Abfallbehälter für Grünabfälle oder einem Kompostbehälter o. ä. verbracht. Dabei sammeln sich weiterhin von den Abfällen tropfende Restflüssigkeiten im Raum 5 und können nicht aus dem Einsatz herauslaufen, was zu ungewünschten Verschmutzungen unterhalb des transportierten Einsatzes führen würde.

Um den Boden 1 des Einsatzes zu stabilisieren ist dieser mit einer Wölbung nach oben ausgestattet. Hierdurch bildet sich auch unterhalb des Bodens 1 ein Hohlraum 7, in dem ein Griff für einen Stöpsel im Ablauf des Restebeckens 7 liegen kann.

Es ist hier noch zu erkennen, dass der dargestellte Einsatz nahe zu seinem oberen Rand einen Bügelgriff 8 trägt. Dieser ist, wie in der Figur 3 zu erkennen über eine Niete 9 in einer Lochung in der Wand 2 verschwenkbar gehalten. Er hat dabei eine Kontur, so dass er sich in der hier dargestellten Ruheposition entlang des Inneren der Wand erstreckt. Dabei liegt er an seinem Scheitelpunkt auf einer linsenförmigen Einbuchtung 9 auf, die in die Wand des Einsatzes eingeprägt ist.

Aus dieser Ruheposition lässt sich der Griff 8 somit gut greifen und dann über ihn der Einsatz aus dem Restebecken entnehmen und transportieren.

## Patentansprüche

1. Gelochter Einsatz für ein Becken (6) einer Küchenspüle, mit einem Boden (1) und einer um diesen umlaufenden Wand (2),
wobei die vorhandene Lochung (3) nur an der umlaufenden Wand (2) ist und an deren unteren Ende einen Abstand (4) zum Boden (1) aufweist,
**dadurch gekennzeichnet,**
**dass** der Boden (1) in seiner Mitte nach oben gewölbt ist.

2. Einsatz gemäß Anspruch 1,
**dadurch gekennzeichnet,**
**dass** am oberen Rand der Wand (2) ein Bügelgriff (8) angebracht ist, der in eine nahe zum Rand liegende Ruheposition verschwenkbar ist, wobei der Bügelgriff eine Form hat, mit der er sich in seiner Ruheposition entlang des Inneren der Wand (2) erstreckt.

3. Einsatz gemäß Anspruch 1,
**dadurch gekennzeichnet,**
**dass** die Lochung (3) in der umlaufenden Wand (2) in Form vertikaler Schlitze ausgebildet ist.

## Claims

1. Perforated insert for a bowl (6) of a kitchen sink, with a base (1) and a peripheral wall (2) running around it, wherein the perforation (3) which is provided is only on the peripheral wall (2) and is spaced (4) from the base (1) at its lower end, **characterised in that** the base (1) is curved upwards in its centre.

2. Insert as claimed in Claim 1, **characterised in that** a bracket handle (8) is attached on the upper edge of the wall (2) and is pivotable into a rest position in which it lies close to the edge, the bracket handle having a shape such that in its rest position it extends along the interior of the wall (2).

3. Insert as claimed in Claim 1, **characterised in that** the perforation (3) in the peripheral wall (2) is constructed in the form of vertical slots.

## Revendications

1. Insert perforé pour une cuve (6) d'évier de cuisine, qui est doté d'un fond (1) et d'une paroi (2) entourant ce dernier, les perforations (3) n'étant ménagées que dans la paroi périphérique (2) et leurs extrémités inférieures présentant un écart (4) par rapport au fond (1), **caractérisé en ce que** le fond (1) est convexe en son milieu.

2. Insert selon la revendication 1, **caractérisé en ce qu'**au bord supérieur de la paroi (2) est fixée une poignée en forme d'étrier (8) qui peut être pivotée dans une position de repos dans laquelle elle est située à proximité du bord, la poignée ayant une forme telle qu'en position de repos, elle s'étend le long de la face intérieure de la paroi (2).

3. Insert selon la revendication 1, **caractérisé en ce que** les perforations (3) dans la paroi périphérique (2) sont réalisées sous forme de fentes verticales.
